# EUROPEAN PATENT APPLICATION

(11) **EP 2 806 357 A1**
(43) Date of publication of application: **26.11.2014**
(21) Application number: 14160807.5
(22) Date of filing: 20.03.2014
(51) Int. Cl.: G06F 9/445, G06F 17/30

(54) **Method and communication device for updating a web application**

(30) Priority: 24.05.2013 CN 201310198466
(71) Applicant: Huawei Device Co., Ltd., Longgang District Shenzhen Guangdong 518129 (CN)
(72) Inventor: Wen, Zhigang, 518129 Shenzhen (CN); Wei, Jie, 518129 Shenzhen (CN); Yang, Mengying, 518129 Shenzhen (CN); Zheng, Yuhang, 518129 Shenzhen (CN); Cui, Qianqian, 518129 Shenzhen (CN); Gao, Wenmei, 518129 Shenzhen (CN)
(74) Representative: Maiwald Patentanwalts GmbH

(57) **Abstract**

Embodiments of the present invention disclose a method for updating a Web App. The method includes: when receiving an update request for updating a currently running Web application, continuing to run the Web application, and downloading an update package of a new version of the Web application; after the downloading of the update package is completed, performing installation of the update package in a background, where a new installation file generated during the installation is stored in a first path, which is different from a second path where an installation file of a current version of the Web application is stored; and loading a page file in the new installation file to the Web application to display a page of the new version.

## Description

### TECHNICAL FIELD

The present invention relates to the field of communications, and in particular, to a method and a communication device for updating a Web application.

### BACKGROUND

With fast development of a Web (Web) technology and Hypertext Markup Language 5 (Hypertext Markup Language, HTML5), a mobile operating system (for example, a Firefox OS system) built by using an open Web technology emerges. This mobile operating system is a network operating environment, where the whole system and applications (Applications, Apps) running in the system are all built based on the open network technology, so that the system has advantages such as cross-platform applications, low device costs, and open sources. Web Apps running in the system mainly include Web Apps in a Web form and Web Apps in a packaged form. The Web Apps in the packaged form can access application programming interfaces (Application Programming Interface, API) at a bottom layer of a device, such as APIs of a gravity sensor and an orientation sensor. Therefore, a Web App featuring good user experience can be developed. However, when updating the version of the Web App, a user needs to quit the currently used Web App. The user can continue to use the Web App only after installing the new version and restarting the Web App. That is, it is troublesome to update the Web App in the packaged form in the mobile operating system built by using the open Web App technology, and user experience in the update process is poor.

### SUMMARY

Embodiments of the present invention provide a method and a communication device for updating a Web App, so that it is convenient to update a Web App in a packaged form in a mobile operating system built by using an open Web App technology, and high user experience is achieved in an update process.

In a first aspect, an embodiment of the present invention provides a method for updating a Web application, including:
when receiving an update request for updating a currently running Web application, continuing to run the Web application, and downloading an update package of a new version of the Web application;
after the downloading of the update package is completed, performing installation of the update package in a background, wherein a new installation file generated during the installation is stored in a first path, which is different from a second path where an installation file of a current version of the Web application is stored; and
loading a page file in the new installation file to the Web application to display a page of the new version.

In a first possible implementation manner of the first aspect, the page file includes:
a page file included in the new installation file and corresponding to a current page of the Web application; or
a page file included in the new installation file and used to display a home page of the Web application of the new version.

According to the first possible implementation manner of the first aspect, in a second possible implementation manner of the first aspect, the loading a page file in the new installation file to the Web application includes:
determining a sub-path of the current page of the Web application in the second path; and
loading a page file in a sub-path of the first path to the Web application.

According to the second possible implementation manner of the first aspect, in a third possible implementation manner of the first aspect, before the page of the new version is displayed, the method includes:
temporarily storing data used to indicate a current status of the Web application; and
after the page of the new version is displayed, the method further includes:
   loading the data to the page of the new version, so that the current status is displayed on the page of the new version.

According to the third possible implementation manner of the first aspect, in a fourth possible implementation manner of the first aspect, the temporarily storing data used to indicate a current status of the Web application includes:
invoking a first command in a preset application programming interface to temporarily store the data used to indicate the current status of the Web application to a cache folder corresponding to the application programming interface; and
the loading the data to the page of the new version includes:
   invoking a second command in the application programming interface to load the data in the cache folder to the page of the new version.

According to any one of the foregoing implementation manners of the first aspect, in a fifth possible implementation manner of the first aspect, the downloading an update package of a new version of the Web application includes:
downloading all data packages of the new version of the Web application; or
downloading a differential data package between the new version of the Web application and the current version of the Web application.

According to the fifth possible implementation manner of the first aspect, in a sixth possible implementation of the first aspect, after the downloading a differential data package between the new version of the Web application and the current version of the Web application, and before the performing installation of the update package in a background, the method further includes:
transferring, to a folder used to store the data package of the differential file, files in the current version that are the same as files in the new version.

According to the first aspect or any one of the first to fourth implementation manners of the first aspect, in a seventh possible implementation manner of the first aspect, after the performing installation of the update package in a background, the method further includes:
setting the first path as a default path of the Web application.

According to the seventh possible implementation manner of the first aspect, in an eighth possible implementation manner of the first aspect, the setting the first path as a default path of the Web application includes:
binding the first path with an application identifier of the Web application, so that the first path is set as the default path of the Web application.

According to the first aspect or any one of the first to fourth implementation manners of the first aspect, in a ninth possible implementation manner of the first aspect, the receiving an update request for updating a currently running Web application includes:
receiving an update request input by a user for updating the currently running Web application; or
automatically generating an update request for updating the currently running Web application.

According to a second aspect, an embodiment of the present invention provides a communication device, including a downloading unit, an installing unit, and a loading unit, where:
the downloading unit is configured to: when receiving an update request for updating a currently running Web application, continue to run the Web application, and download an update package of a new version of the Web application;
the installing unit is configured to perform installation of the update package in a background after the downloading of the update package is completed, where a new installation file generated during the installation is stored in a first path, which is different from a second path where an installation file of a current version of the Web application is stored; and
the loading unit is configured to load a page file in the new installation file to the Web application to display a page of the new version.

In a first possible implementation manner of the second aspect, the page file includes:
a page file included in the new installation file and corresponding to a current page of the Web application; or
a page file included in the new installation file and used to display a home page of the Web application of the new version.

According to the first possible implementation manner of the second aspect, in a second possible implementation manner of the second aspect, the loading unit is further configured to determine a sub-path of the current page of the Web application in the second path, and load a page file in a sub-path of the first path to the Web application.

According to the second possible implementation manner of the second aspect, in a third possible implementation manner of the second aspect, the device further includes:
a caching unit, configured to temporarily store data used to indicate a current status of the Web application; where
the loading unit is further configured to load the data to the page of the new version, so that the current status is displayed on the page of the new version.

According to the third possible implementation manner of the second aspect, in a fourth possible implementation manner of the second aspect, the caching unit is further configured to invoke a first command in a preset application programming interface to temporarily store the data used to indicate the current status of the Web application to a cache folder corresponding to the application programming interface; and
the loading unit is further configured to invoke a second command in the application programming interface to load the data in the cache folder to the page of the new version.

According to the second aspect or any one of the first to fourth implementation manners of the second aspect, in a fifth possible implementation of the second aspect, the downloading unit is further configured to download all data packages of the new version of the Web application; or
the downloading unit is further configured to download a differential data package between the new version of the Web application and the current version of the Web application.

According to the fifth possible implementation manner of the second aspect, in a sixth possible implementation manner of the second aspect, the device further includes:
a transferring unit, configured to transfer, to a folder used to store the data package of the differential file, files in the current version that are the same as files in the new version.

According to the second aspect or any one of the first to fourth implementation manners of the second aspect, in a seventh possible implementation manner of the second aspect, the device further includes:
a setting unit, configured to set the first path as a default path of the Web application.

According to the second aspect or any one of the first to fourth implementation manners of the second aspect, in an eighth possible implementation manner of the second aspect, the receiving an update request for updating a currently running Web application includes:
receiving an update request input by a user, for updating the currently running Web application; or
automatically generating an update request for updating the currently running Web application.

In the foregoing technical solutions, when an update request for updating a currently running Web application is received, running of the Web application is continued, and an update package of a new version of the Web application is downloaded; after the downloading of the update package is completed, installation of the update package is performed in a background, where a new installation file generated during the installation is stored in a first path, which is different from a second path where an installation file of a current version of the Web application is stored; and a page file in the new installation file is loaded to the Web application to display a page of the new version. In this case, the Web application runs in the whole update process without interruption, and a user can use the Web application without interruption. Therefore, it is convenient to update a Web App in a packaged form in a mobile operating system built by using an open Web App technology, and high user experience is achieved in an update process.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for updating a Web App according to an embodiment of the present invention;
FIG. 2 is a schematic flowchart of another method for updating a Web App according to an embodiment of the present invention;
FIG. 3 is a schematic flowchart of another method for updating a Web App according to an embodiment of the present invention;
FIG. 4 is a schematic structural diagram of another communication device according to an embodiment of the present invention;
FIG. 5 is a schematic structural diagram of another communication device according to an embodiment of the present invention;
FIG. 6 is a schematic structural diagram of another communication device according to an embodiment of the present invention; and
FIG. 7 is a schematic structural diagram of another communication device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

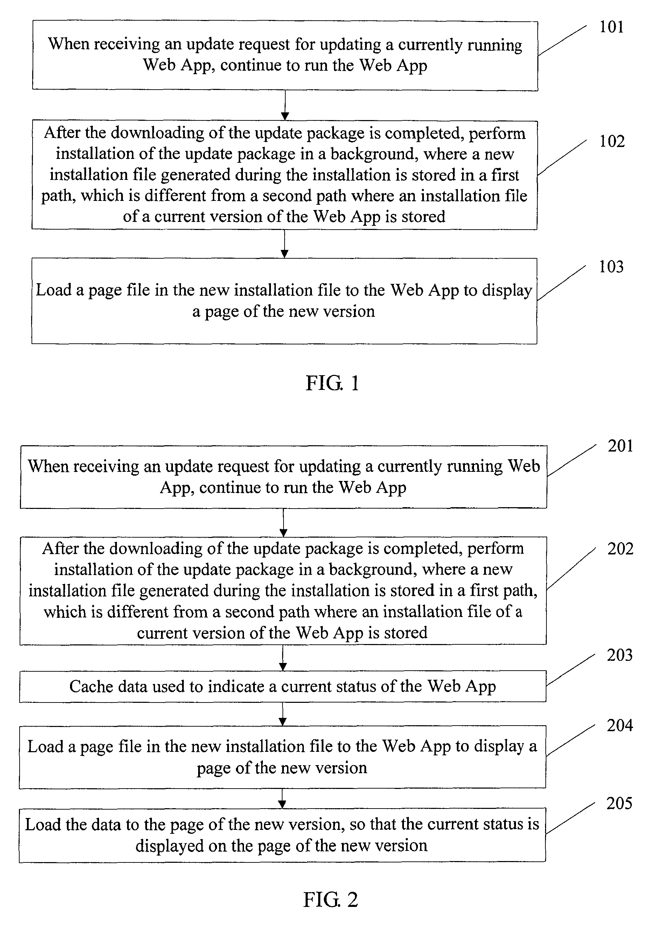

Referring to FIG. 1, which is a flowchart of a method for updating a Web App according to an embodiment of the present invention. In the method for updating a Web App shown in FIG. 1, to make it convenient to update a Web App in a packaged form in a mobile operating system built by using an open Web App technology, and achieve high user experience in an update process, in the embodiment shown in FIG. 1, when an update request for updating a currently running Web App is received, running of the Web App is continued, and an update package of a new version of the Web App is downloaded; after the downloading of the update package is completed, installation of the update package is performed in a background, where a new installation file generated during the installation is stored in a first path, which is different from a second path where an installation file of a current version of the Web App is stored; and a page file in the new installation file is loaded to the Web App to display a page of the new version. In this case, it is convenient to update a Web App in a packaged form in a mobile operating system built by using an open Web App technology, and high user experience is achieved in an update process.

FIG. 1 is a schematic flowchart of a method for updating a Web App according to an embodiment of the present invention. As shown in FIG. 1, the method includes the following:

101. When receiving an update request for updating a currently running Web App, continue to run the Web App, and download an update package of a new version of the Web App.

The Web App may be any Web App that can run in a communication device, for example, a Web App in a packaged form in a mobile operating system (for example, a Firefox OS system) built by using an open Web App technology, and may also be a Web App that cam run in other mobile operating systems, for example, a Web App that can run in an Android system, an iOS system, or a Windows Phone system. The manner of downloading the update package of the new version is not limited in this embodiment, for example, may be sending, to a server, a request message for requesting returning the update package, and then receiving the update package sent by the server; and for example, may be receiving the update package actively sent by the server.

102. After the downloading of the update package is completed, perform installation of the update package in a background, where a new installation file generated during the installation is stored in a first path, which is different from a second path where an installation file of a current version of the Web App is stored.

In this step, the performing installation of the update package in a background means performing installation of the update package while running the Web App, and storing a new installation file generated during the installation in a first path, which is different from a second path where an installation file of a current version of the Web App is stored.

103. Load a page file in the new installation file to the Web App to display a page of the new version.

The page file is a page file in the new installation file. In this case, the page obtained by loading the page file is a page of the new version, that is, the page displayed by the Web App is a page of the new version, that is, the update of the Web App is completed.

This embodiment may be applied to any communication device supporting Web Apps, that is, communication devices capable of implementing the foregoing method, for example, a mobile phone, a tablet computer, a computer, and a vehicle-mounted device.

In the foregoing technical solution, when an update request for updating a currently running Web App is received, running of the Web App is continued, and an update package of a new version of the Web App is downloaded; after the downloading of the update package is completed, installation of the update package is performed in a background, where a new installation file generated during the installation is stored in a first path, which is different from a second path where an installation file of a current version of the Web App is stored; and a page file in the new installation file is loaded to the Web App to display a page of the new version. In this case, the Web App runs in the whole update process without interruption, and a user may use the Web App without interruption. Therefore, it is convenient to update a Web App in a packaged form in a mobile operating system built by using an open Web App technology, and high user experience is achieved in an update process.

FIG. 2 is a schematic flowchart of a method for updating a Web App according to an embodiment of the present invention. As shown in FIG. 2, the method includes the following:

201. When receiving an update request for updating a currently running Web App, continue to run the Web App, and download an update package of a new version of the Web App.

The Web App may be any Web App that can run in a communication device, for example, a Web App in a packaged form in a mobile operating system (for example, a Firefox OS system) built by using an open Web App technology, and may also be a Web App that can run in other mobile operating systems, for example, a Web App that can run in an Android system, an iOS system, or a Windows Phone system. The manner of downloading the update package of the new version is not limited in this embodiment, for example, may be sending, to a server, a request message for requesting returning the update package and then receiving the update package sent by the server; and for example, may be receiving the update package actively sent by the server.

The manner of knowing that the currently running Web App has a new version is not limited by this embodiment, for example, may be knowing, through communication with an application store (App Store), that the currently running Web App has a new version, or actively notifying, by an App Store, that the currently running Web App has a new version, or knowing, through communication with a server, that the currently running Web App has a new version, or actively notifying, by a server, that the currently running Web App has a new version.

The update package may be all files of the new version, or the update package may be a differential file between the new version and the current version of the Web App. That is, step 201 may be downloading all files of the new version or downloading a differential file between the new version of the Web App and the current version of the Web App.

202. After the downloading of the update package is completed, perform installation of the update package in a background, where a new installation file generated during the installation is stored in a first path, which is different from a second path where an installation file of a current version of the Web App is stored.

In this step, the performing installation of the update package in a background means performing installation of the update package while running the Web App, and storing a new installation file generated during the installation in a first path, which is different from a second path where an installation file of a current version of the Web App is stored.

203. Temporarily store data used to indicate a current status of the Web App.

The current status may be a current behavior of the continuously running Web App, or a transaction currently processed by the continuously running Web App. Temporarily storing the data used to indicate the current status of the Web App means temporarily storing the current status of the continuously running Web App. For example, if the current status of the continuously running Web App is chatting with a friend, step 203 may be temporarily storing a Web page of the chat, namely, content information of the chat. The temporarily stored data in this embodiment is actively invoked by the Web App only when the data is updated, and the data is immediately deleted after the current status is loaded to the Web App. The data to be temporarily stored includes one or more of the following types of data: user login status information (a user name, a password, cookie, and so on), information of an opened window, input or uploaded media information (text, picture, audio, video, and so on), the cache related to page running, historical record information after a user logs in to the Web App, zooming ratio information of a page, personalized setting information of a user, and so on.

204. Load a page file in the new installation file to the Web App to display a page of the new version.

The page file is a page file in the new installation file. In this case, the page obtained by loading the page file is a page of the new version, that is, the page displayed by the Web App is a page of the new version, that is, the update of the Web App is completed.

The page file may include:
a page file included in the new installation file and corresponding to a current page of the Web App; or
a page file included in the new installation file and used to display a home page of the Web App of the new version (for example, an index.html file).

205. Load the data to the page of the new version, so that the current status is displayed on the page of the new version.

The data is used to indicate the current status of the Web App, that is, in step 205, on the updated page of the new version, the current status may be recovered on the page of the new version. However, in practice, step 204 and step 205 are completed within a very short time, which is not sensed by the user basically. Therefore, the user has an impression that the current status is always displayed and is displayed just through pages of different versions.

In an optional implementation manner, the page file includes a page file in the new installation file and corresponding to a current page of the Web App, and the loading a page file in the new installation file to the Web App in step 204 may include:
determining a sub-path of the current page of the Web App in the second path; and
loading a page file in a sub-path of the first path to the Web App.

That is, the sub-path of the page file in the first path is the same as the sub-path of the current page of the Web App in the second path. For example, if the current page of the Web App is "second path/modules/purchase/purchase.html", the page file to be loaded in the first path is "first path/modules/purchase/purchase.html". That is, the sub-path, "/modules/purchase/", is the same.

In an optional implementation manner, step 203 may include:
invoking a first command in a preset application programming interface to temporarily store the data used to indicate the current status of the Web App to a cache folder corresponding to the application programming interface. Specifically, the Web App may be controlled to invoke a first command in a preset application programming interface to temporarily store the data used to indicate the current status of the Web App to a cache folder corresponding to the application programming interface.

After the installation is completed in step 202, a prompt message for prompting the user of completion of the installation may be displayed. When the user sees the prompt message, and the Web App receives a confirmation message input by the user for determining to temporarily store the current status of the Web App, the Web App may invoke a first command in a preset application programming interface to temporarily store the data used to indicate the current status of the Web App to a cache folder corresponding to the application programming interface. Or after the installation is completed, the Web App directly invokes a first command in a preset application programming interface to temporarily store the data used to indicate the current status of the Web App to a cache folder corresponding to the application programming interface.

The application programming interface may include two commands, namely, a first command and a second command, where the first command is used to temporarily store the data used to indicate the current status of the Web App, and the second command is used to load the data temporarily stored by the first command. Furthermore, the data temporarily stored by the first command is temporarily stored to a specified folder, namely, the cache folder. The data temporarily stored in the folder may be data in a JSON format (the format has no specific Chinese meanings), and the suffix of the folder is also a specified suffix, for example, a .db suffix. That is, the second command loads the current status of the folder with the .db suffix. Furthermore, the current status temporarily stored by the first command may further be set according to a developer of the Web App, that is, a mapping relationship between data and the current status is set by the developer. Specifically, the developer pre-specifies a mapping relationship between a behavior and data, that is, the data may be known once the current status of the Web App is known. For example, the current status of the Web App is chatting with friend a on a direct message chat Web page. Therefore, the data in step 203 may include:
"page": "chat" and "friend": "a", where "page":"chat" is used to indicate a direct message chat Web page, and "friend": "a" is used to indicate a chat with friend a. Specifically, "page":"chat" is specified by the developer and corresponds to the direct message chat Web page, and "friend":"a" is specified by the developer and corresponds to the chat with friend a. In this case, when it is known that the current status of the Web App is chatting with friend a on the direct message chat Web page, in step 203, the first command may be invoked to temporarily store "page": "chat" and "friend":"a" to the cache folder corresponding to the application programming interface.

The following describes the application programming interface by using a specific example, that is, the application programming interface may be defined as follows:

```
          interface NavigatorUpdateCache {
                                  void updateCache( userData );
                                  void updateCacheLoad( );
                            }
          updateCache( userData ) is the first command, userData is the data, and userData
 is data in the json format; updateCacheLoad( ) is the second command and used to invoke the
 data. Furthermore, the cache folder may be an updateCache.db folder in
 "/data/data/org.mozilla.firefox/files/mozilla/WebApp/Apps/AppName/temp".
```

The current status of the Web App is chatting with friend a on a direct message chat Web page. The userData is as follows:

```
          userData={
             "page":"chat", //indicates a direct message chat Web page
             "friend": "a" //indicates a chat with a
          }
```

Step 205 may include:
invoking a second command in the application programming interface to load the data in the cache folder to the page of the new version, so as to display the current status on the page of the new version. Specifically, the Web App may invoke a second command in the application programming interface to load the data in the cache folder to the page of the new version, so as to display the current status on the page of the new version.

After the installation is completed, the Web App may be run. The Web App invokes the second command in the application programming interface to load the data to recover the current status. Specifically, the updateCacheLoad( ) may be invoked to load the data in the cache folder to recover the current status. In this case, in the whole process, the current status is not interrupted, so that the user may use the Web App without interruption in the whole update process.

In an optional implementation manner, the update package may be all files of the new version, and may also be a differential file between the new version and the current version of the Web App. That is, the downloading the update package of the new version may include:
downloading all data packages of the new version of the Web App, that is, all data packages of the new version are downloaded, where the downloading path is not limited by the embodiment of the present invention.

The downloading the update package of the new version may further include:
downloading a differential data package between the new version of the Web App and the current version of the Web App. In this case, only a differential file between the new version and the current version of the Web App needs to be downloaded, thereby saving network resources. However, because only the differential file is downloaded, and the differential file generally cannot complete running of the Web App, it is necessary to transfer, to a folder used to store the data package of the differential file, files in the current version that are the same as files in the new version. Specifically, after the downloading a data package of a differential file between the new version of the Web App and the current version of the Web App, and before the performing installation of the update package in a background, the method may further include:
   transferring, to a folder used to store the data package of the differential file, files in the current version that are the same as files in the new version.

The folder used to store the data package of the differential file includes the differential file and the same files, that is, including all data packages of the new version. In this case, the installation can be performed, that is step 202 is performed.

Specifically, the App developer App Store or the file corresponding to the Web App on the server may describe the update information, that is, the App Store includes description information of the differential file between the new version and the current version of the Web App, that is, the App Store knows the differential file of the current version of the Web App. For example, a field "change (change)" is added to the file corresponding to the Web App, where the change field includes a value for indicating the differential file, that is, the change field includes some specific values to describe which files are changed. When the App Store or server receives a request message for requesting downloading the update package, or when the App Store or server knows that the currently running Web App has a new version, the App Store or server may send the differential file between the new version and the current version of the Web App to the first path of a communication device, where the communication device is a device for implementing this method.

It should be noted that the differential file may further include a file used to indicate relative positions for invoking other files, for example, an index.html (the file is a file well-known in the Web technology, and has no specific Chinese meanings) file.

The following describes the update in the file corresponding to the Web App (for example, a manifest.webapp file) by using a specific example. A Manifest (the field is a field well-known in the Web technology, and has no specific Chinese meanings) field in the file is as follows: 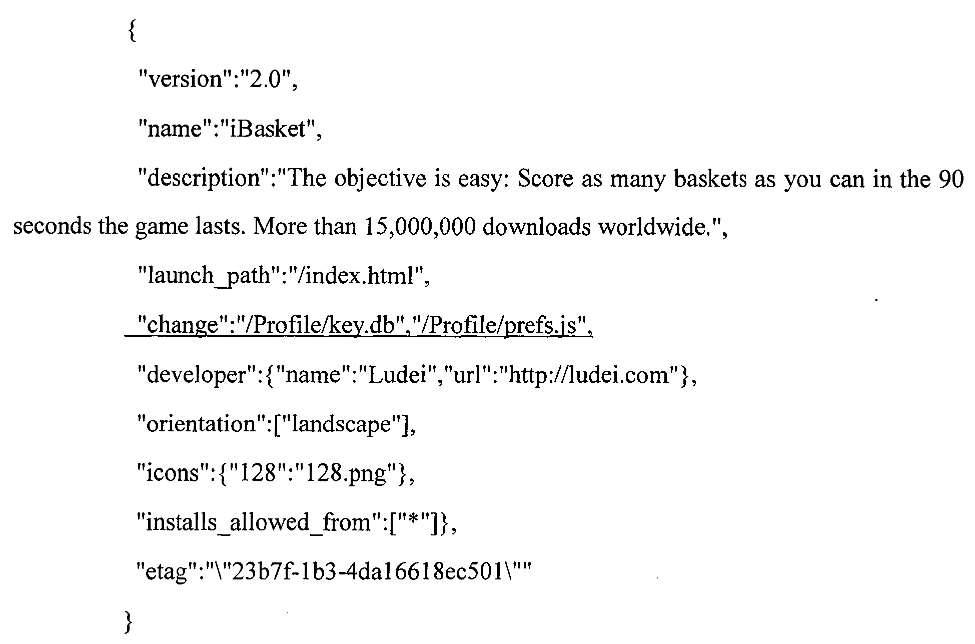 where, the underlined field is the change field.

In another embodiment, after step 203, the method may further include:
setting the first path as a default path of the Web App. The method further specifically includes: binding the first path with an application identifier of the Web App, that is, binding the first path with an application identifier (App URI, namely, App Uniform Resource Identifier, application uniform resource identifier) generated during the original installation of the Web App to replace the original associated path, so that the first path is used as the default path of the Web App.

For example, the following path is set as the default path of the Web App:
"/data/data/org.mozilla.firefox/files/mozilla/WebApp/Apps/AppName/version2.0"

For another example, the following path is bound with the original App URI of the Web App and is used as the default path of the Web App:
"/data/data/org.mozilla.firefox/files/mozilla/WebApp/Apps/AppName/version2.0" is bound with the original App URI (for example, app://c13c6f30-ce25-11e0-9572-0800200c9a66/index.html) to replace the originally associated path.

In an existing Web App OS, after the Web App is installed, the system generates an App URI for the Web App and uses the App URI as the default open path of the Web App, but the URI is only a logical character string and needs to be mapped to a specific file path.

After the setting the first path as a default path of the Web App, the method may further include:
deleting the file in the second path and uninstalling the Web App of the current version.

In another embodiment, step 201 may further include:
receiving an update request input by the user for updating the currently running Web App, continuing to run the Web App, and downloading the update package of the new version. That is, it can be implemented that the update process is triggered by the user.

In another embodiment, the update may be directly completed not according to the command input by the user. That is, step 201 may also be: automatically generating an update request for updating the currently running Web App, continuing to run the Web App, and directly downloading the update package of the new version. Of course, downloading of the update package is performed in the background.

This embodiment may be applied to any communication device supporting Web Apps, that is, communication devices capable of implementing the foregoing method, for example, a mobile phone, a tablet computer, a computer, and a vehicle-mounted device.

In the foregoing technical solution, on the basis of the foregoing embodiment, multiple optional implementation manners are added, and all these can make it convenient to update a Web App in a packaged form in a mobile operating system built by using an open Web App technology, and high user experience is achieved in an update process.

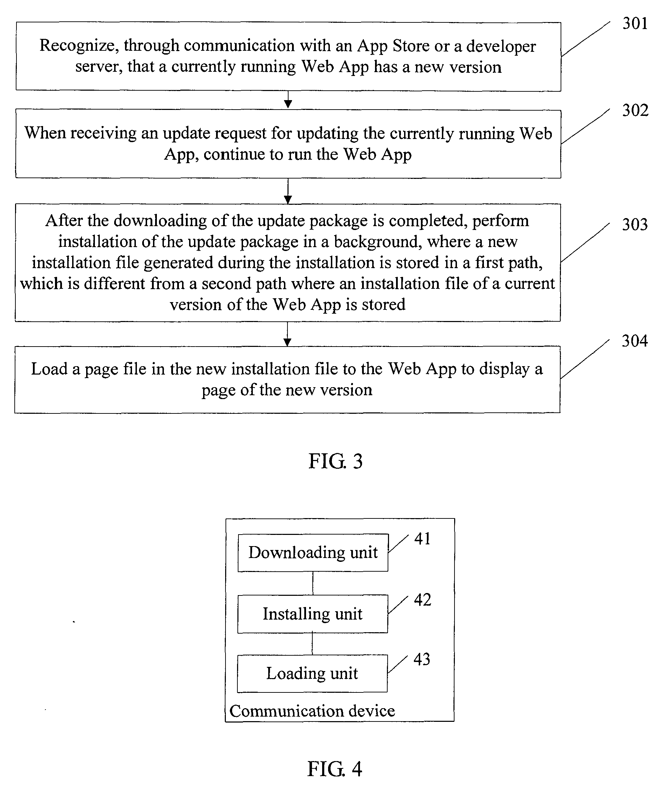

FIG. 3 is a schematic flowchart of a method for updating a Web application according to an embodiment of the present invention. As shown in FIG. 3, the method includes the following:
301. Recognize, through communication with an App Store or a developer server, that a currently running Web App has a new version.

Step 301 may include:
sending a query message including a version number of the Web App to the App Store, where the App Store compares whether the version number of the Web App and the version number of the Web App in the App Store are consistent, and if not, determines that the currently running Web App has a new version. Specifically:
   every time when the developer submits a data package (for example, a zip package) of the new version of the Web App to the App Store, the App Store automatically generates, according to content in a manifest. WebApp (the file is a file well-known in the Web technology, and has no specific Chinese meanings) file in the data package, a file (for example, a mini manifest file) including version information of the Web App, for example, the file includes a "version" field, which is used to identify the version number of the data package.

After the Web App of the current version is downloaded and installed in a communication device, a file (a WebApp.json file) including the version number of the Web App is automatically generated and stored in the communication device, for example, the file includes a "version" field, which is used to identify the version number of the Web App.

The Web App of the current version may perform communication with the App Store periodically and actively, and compare whether the "version" field in the App Store is consistent with the "version" field in the communication device. When the version numbers are inconsistent, it indicates that the currently running Web App has a new version. For example, the "version" field in the mini manifest file in the App Store is compared with the "version" field in the Web App.json file in the communication device.

Step 301 may include:
when the App Store determines that the currently running Web App has a new version, receiving an indication message sent by the App Store for indicating that the Web App has a new version. Specifically:
   every time when the communication device downloads a Web App from the App Store and installs the Web App, the App Store may generate a record, and record the version that has been downloaded by the communication device. Meanwhile, the App Store periodically checks the Web App in the communication device, namely, the running Web App in step 201, and compares the App version number in the communication device with the version number owned by the App Store, thereby determining that the currently running Web App has a new version.

Step 301 may include:
sending a query message including basic information of the Web App to the App Store, where the App Store compares whether the basic information of the Web App and the basic information of the Web App in the App Store are consistent, and if not, determines that the currently running Web App has a new version. Specifically:
   an optional field (for example, updateByServer) is added to the package file (for example, manifest. Web App) of the Web App of the current version, where the field may be as follows:

      ```
          updateByServer:{
                         "url": "http://xxxxxxx"
              }
```
where, "url": "http://xxxxxxx" is used to indicate an interface provided by the developer server for detecting update and returning the latest version.

When the Web App of the current version is installed, a file including the basic information of the Web App is generated in the default path of the Web App, for example, the version number and the name of the Web App.

The Web App of the current version may periodically obtain a value of a uniform resource locator (Uniform Resource Locator, URL) value from the updateByServer, and then use the locally stored basic information of the Web App as a parameter to access the URL. After receiving the parameter sent by the Web App, the developer server queries, according to the basic information of the Web App, whether the Web App has a new version, and if the Web App does not have a new version, returns a message for indicating that the Web App does not have a new version, and does not perform an operation. If the Web App has a new version, the developer server returns a message for indicating that the Web App has a new version.

Step 301 may include:
when the developer server determines that the currently running Web App has a new version, receiving an indication message sent by the developer server for indicating that the Web App has a new version. Specifically:
   the developer server actively obtains user equipment information, thereby completing the process of detecting whether the currently running Web App has a new version. In order for the developer server to conveniently find the Web App installed in each communication device, a registration mechanism needs to be added, and furthermore, to reduce trouble of registration of the communication device, an account of the App Store may be used to log in to the developer server. Herein the App Store needs to open an administrator -based account authentication interface, so that the developer can invoke the interface. Therefore, the communication device can securely log in to the developer server by using the account of the App Store.

On the premise that the communication device logs in by using the account of the App Store, the developer server can find, by using the account, the App Store installed in the communication device, periodically check the App Store and version number in the communication device, and determine, by comparing version numbers, whether the currently running Web App has a new version.

302. When receiving an update request for updating the currently running Web App, continue to run the Web App, and download an update package of the new version of the Web App.

Step 302 may also be: when downloading of the update package is completed, displaying a prompt message for prompting the user that downloading of the new version is completed, and when the user sees the prompt message, and a confirmation message input by the user for determining to temporarily store a current status of the Web App is received, downloading the update package of the new version; or when downloading of the update package is completed, downloading the update package of the new version.

The Web App may be any Web App that can run in a communication device, for example, a Web App in a packaged form in a mobile operating system (for example, a Firefox OS system) built by using an open Web App technology, and may also be a Web App that can run in other mobile operating systems, for example, a Web App that can run in an Android system, an iOS system, or a Windows Phone system.

The update package may be all files of the new version, or the update package may be a differential file between the new version and the current version of the Web App. That is, step 302 may be downloading all files of the new version or downloading a differential file between the new version of the Web App and the current version of the Web App.

303. After the downloading of the update package is completed, perform installation of the update package in a background, where a new installation file generated during the installation is stored in a first path, which is different from a second path where an installation file of a current version of the Web App is stored.

304. Load a page file in the new installation file to the Web App to display a page of the new version.

In an optional implementation manner, before step 304, the method may further include:
temporarily storing data used to indicate a current status of the Web App.

For the step of temporarily storing, reference may be made to the implementation manner described in the foregoing embodiment.

After step 304, the method may further include:
loading the data to the page of the new version, so that the current status is displayed on the page of the new version.

For this step, reference may be made to the implementation manner described in the foregoing embodiment.

In another embodiment, the update package may be all files of the new version, and may also be a differential file between the new version and the current version of the Web App. That is, the downloading the update package of the new version may include:
downloading all files of the new version to a first path, which is different from a path where a file of the current version is stored.

The downloading the update package of the new version may further include:
downloading a differential file between the new version and the current version of the Web App to a first path, which is different from a path where a file of the current version is stored. In this case, only a differential file between the new version and the current version of the Web App needs to be downloaded, thereby saving network resources. However, because only the differential file is downloaded, and the differential file generally cannot complete running of the Web App, it is necessary to transfer, to a folder used to store the data package of the differential file, files in the current version that are the same as files in the new version. Specifically, after the downloading a data package of a differential file between the new version of the Web App and the current version of the Web App, and before the performing installation of the update package in a background, the method may further include:
   transferring, to a folder used to store the data package of the differential file, files in the current version that are the same as files in the new version.

The folder used to store the data package of the differential file includes the differential file and the same files, that is, including all data packages of the new version. In this case, the installation can be performed, that is step 303 is performed.

This embodiment may be applied to any communication device supporting Web Apps, that is, communication devices capable of implementing the foregoing method, for example, a mobile phone, a tablet computer, a computer, and a vehicle-mounted device.

In the foregoing technical solution, on the basis of the foregoing embodiment, multiple optional implementation manners are added, and all these can make it convenient to update a Web App in a packaged form in a mobile operating system built by using an open Web App technology, and high user experience is achieved in an update process.

The following describes apparatus embodiments of the present invention. The apparatus embodiments of the present invention are used to execute the methods in method Embodiment 1, method Embodiment 2, and method Embodiment 3 of the present invention. For ease of description, only related parts of the embodiments of the present invention are illustrated. For the specific technical details that are not disclosed, reference may be made to Embodiment 1, Embodiment 2, and Embodiment 3 of the present invention.

FIG. 4 is a schematic structural diagram of a communication device according to an embodiment of the present invention, where the communication device is used to execute a method for updating a Web App according to an embodiment of the present invention. As shown in FIG. 4, the communication device includes: a downloading unit 41, an installing unit 42, and a loading unit 43.

The downloading unit 41 is configured to: when receiving an update request for updating a currently running Web App, continue to run the Web App, and download an update package of a new version of the Web App.

The Web App may be any Web App that can run in a communication device, for example, a Web App in a packaged form in a mobile operating system (for example, a Firefox OS system) built by using an open Web App technology, and may also be a Web App that can run in other mobile operating systems, for example, a Web App that can run in an Android system, an iOS system, or a Windows Phone system. The manner of downloading the update package of the new version is not limited in this embodiment, for example, may be sending, to a server, a request message for requesting returning the update package, and then receiving the update package sent by the server, and for example, may be receiving the update package actively sent by the server.

The installing unit 42 is configured to: after the downloading of the update package is completed, perform installation of the update package in a background, where a new installation file generated during the installation is stored in a first path, which is different from a second path where an installation file of a current version of the Web App is stored.

The performing installation of the update package in a background by the caching unit 42 means performing installation of the update package while running the Web App, and storing a new installation file generated during the installation in a first path, which is different from a second path where an installation file of a current version of the Web App is stored.

The loading unit 43 is configured to load a page file in the new installation file to the Web App to display a page of the new version.

The page file is a page file in the new installation file. In this case, the page obtained by loading the page file is a page of the new version, that is, the page displayed by the Web App is a page of the new version, that is, the update of the Web App is completed.

The communication device provided by this embodiment may be any communication device supporting Web Apps, for example, a mobile phone, a tablet computer, a computer, and a vehicle-mounted device.

In the foregoing technical solution, when an update request for updating a currently running Web App is received, running of the Web App is continued, and an update package of a new version of the Web App is downloaded; after the downloading of the update package is completed, installation of the update package is performed in a background, where a new installation file generated during the installation is stored in a first path, which is different from a second path where an installation file of a current version of the Web App is stored; and a page file in the new installation file is loaded to the Web App to display a page of the new version. In this case, the Web App runs in the whole update process without interruption, and a user may use the Web App without interruption. Therefore, it is convenient to update a Web App in a packaged form in a mobile operating system built by using an open Web App technology, and high user experience is achieved in an update process.

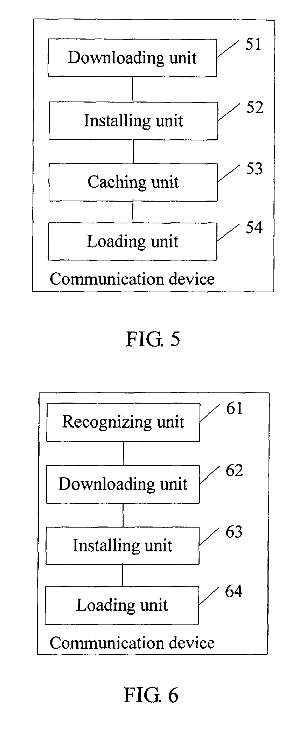

FIG. 5 is a schematic structural diagram of another communication device according to an embodiment of the present invention. As shown in FIG. 5, the communication device includes: a downloading unit 51, an installing unit 52, a caching unit 53, and a loading unit 54.

The downloading unit 51 is configured to: when receiving an update request for updating a currently running Web App, continue to run the Web App, and download an update package of a new version of the Web App.

The Web App may be any Web App that can run in a communication device, for example, a Web App in a packaged form in a mobile operating system (for example, a Firefox OS system) built by using an open Web App technology, and may also be a Web App that can run in other mobile operating systems, for example, a Web App that can run in an Android system, an iOS system, or a Windows Phone system. The manner of downloading the update package of the new version is not limited in this embodiment, for example, may be sending, to a server, a request message for requesting returning the update package, and then receiving the update package sent by the server, and for example, may be receiving the update package actively sent by the server.

The manner of knowing that the currently running Web App has a new version is not limited by this embodiment, for example, may be knowing, through communication with an application store (App Store), that the currently running Web App has a new version, or actively notifying, by an App Store, that the currently running Web App has a new version, or knowing, through communication with a server, that the currently running Web App has a new version, or actively notifying, by a server, that the currently running Web App has a new version.

The update package may be all files of the new version, or the update package may be a differential file between the new version and the current version of the Web App. That is, the downloading unit 51 may download all files of the new version or download a differential file between the new version of the Web App and the current version of the Web App.

The installing unit 52 is configured to: after the downloading of the update package is completed, perform installation of the update package in a background, where a new installation file generated during the installation is stored in a first path, which is different from a second path where an installation file of a current version of the Web App is stored.

In this step, the performing installation of the update package in a background means performing installation of the update package while running the Web App, and storing a new installation file generated during the installation in a first path, which is different from a second path where an installation file of a current version of the Web App is stored.

The caching unit 53 is configured to temporarily store data used to indicate a current status of the Web App.

The current status may be a current behavior of the continuously running Web App, or a transaction currently processed by the continuously running Web App. Temporarily storing the data used to indicate the current status of the Web App means temporarily storing the current status of the continuously running Web App. For example, if the current status of the continuously running Web App is chatting with a friend, the caching unit 53 may temporarily store a Web page of the chat, namely, content information of the chat. The temporarily stored data in this embodiment is actively invoked by the Web App only when the data is updated, and the data is immediately deleted after the current status is loaded to the Web App. The data to be temporarily stored includes one or more of the following types of data: user login status information (a user name, a password, cookie, and so on), information of an opened window, input or uploaded media information (text, picture, audio, video, and so on), the cache related to page running, historical record information after a user logs in to the Web App, zooming ratio information of a page, personalized setting information of a user, and so on.

The loading unit 54 is configured to load a page file in the new installation file to the Web App to display a page of the new version, and load the data to the page of the new version, so that the current status is displayed on the page of the new version.

The data is used to indicate the current status of the Web App, that is, the loading unit 54 recovers the current status on the page of the new version. However, in practice, the page update and data loading are completed within a very short time, which is not sensed by the user basically. Therefore, the user has an impression that the current status is always displayed and is displayed just through pages of different versions.

In an optional implementation manner, the page file includes a page file included in the new installation file and corresponding to a current page of the Web App, and the loading unit 54 may be further configured to determine a sub-path of the current page of the Web App in the second path, and load a page file in a sub-path of the first path to the Web App.

That is, the sub-path of the page file in the first path is the same as the sub-path of the current page of the Web App in the second path.

In an optional implementation manner, the caching unit 53 may be further configured to invoke a first command in a preset application programming interface to temporarily store the data used to indicate the current status of the Web App to a cache folder corresponding to the application programming interface. Specifically, the Web App may be controlled to invoke a first command in a preset application programming interface to temporarily store the data used to indicate the current status of the Web App to a cache folder corresponding to the application programming interface.

After the installing unit 52 completes the installation, a prompt message for prompting the user of completion of the installation may be displayed. When the user sees the prompt message, and the Web App receives a confirmation message input by the user for determining to temporarily store the current status of the Web App, the Web App can invoke a first command in a preset application programming interface to temporarily store the data used to indicate the current status of the Web App to a cache folder corresponding to the application programming interface. Or after the installation is completed, the Web App directly invokes a first command in a preset application programming interface to temporarily store the data used to indicate the current status of the Web App to a cache folder corresponding to the application programming interface.

The application programming interface may include two commands, namely, a first command and a second command, where the first command is used to temporarily store the data used to indicate the current status of the Web App, and the second command is used to load the data temporarily stored by the first command. Furthermore, the data temporarily stored by the first command is temporarily stored to a specified folder, namely, the cache folder. The data temporarily stored in the folder may be data in a json format (the format has no specific Chinese meanings), and the suffix of the folder is also a specified suffix, for example, a .db suffix. That is, the second command loads the current status of the folder with the .db suffix. Furthermore, the current status temporarily stored by the first command may further be set according to a developer of the Web App, that is, a mapping relationship between data and the current status is set by the developer. Specifically, the developer pre-specifies a mapping relationship between a behavior and data, that is, the data may be known once the current status of the Web App is known. For example, the current status of the Web App is chatting with friend a on a direct message chat Web page. Therefore, the data in the caching unit 53 may include:
"page":"chat" and "friend":"a", where "page":"chat" is used to indicate a direct message chat Web page, and "friend": "a" is used to indicate a chat with friend a. Specifically, "page":"chat" is specified by the developer and corresponds to the direct message chat Web page, and "friend":"a" is specified by the developer and corresponds to the chat with friend a. In this case, when it is known that the current status of the Web App is chatting with friend a on the direct message chat Web page, the first command may be invoked to temporarily store "page":"chat" and "friend":"a" to the cache folder corresponding to the application programming interface.

The following describes the application programming interface by using a specific example, that is, the application programming interface may be defined as follows:

```
          interface NavigatorUpdateCache {
                                   void updateCache( userData );
                                   void updateCacheLoad( );
                             }
          updateCache( userData ) is the first command, userData is the data, and userData
 is data in the json format; updateCacheLoad( ) is the second command and used to invoke the
 data. Furthermore, the cache folder may be an updateCache.db folder in
 "/data/data/org.mozilla.firefox/files/mozilla/WebApp/Apps/AppName/temp".
```

The current status of the Web App is chatting with friend a on a direct message chat Web page. The userData is as follows:

```
          userData={
             "page": "chat", //indicates a direct message chat Web page
             "friend": "a" //indicates a chat with a
          }
```

The loading unit 54 may be further configured to invoke a second command in the application programming interface to load the data in the cache folder to the page of the new version, so as to display the current status on the page of the new version. Specifically, the Web App may invoke a second command in the application programming interface to load the data in the cache folder to the page of the new version, so as to display the current status on the page of the new version.

After the installation is completed, the Web App may be run. The Web App invokes the second command in the application programming interface to load the data to recover the current status. Specifically, the updateCacheLoad( ) may be invoked to load the data in the cache folder to recover the current status. In this case, in the whole process, the current status is not interrupted, so that the user may use the Web App without interruption in the whole update process.

In an optional implementation manner, the update package may be all files of the new version, and may also be a differential file between the new version and the current version of the Web App. That is, the downloading the update package of the new version may include:
downloading all data packages of the new version of the Web App, that is, all data packages of the new version are downloaded, where the downloading path is not limited by the embodiment of the present invention. That is, the downloading unit 51 may be further configured to download all data packages of the new version of the Web App.

The downloading the update package of the new version may further include:
downloading a differential data package between the new version of the Web App and the current version of the Web App. That is, the downloading unit 51 may be further configured to download a differential data package between the new version of the Web App and the current version of the Web App. In this case, only a differential file between the new version and the current version of the Web App needs to be downloaded, thereby saving network resources. However, because only the differential file is downloaded, and the differential file generally cannot complete running of the Web App, it is necessary to transfer, to a folder used to store the data package of the differential file, files in the current version that are the same as files in the new version. The device may further include:
   a transferring unit (not shown in the figure), configured to transfer, to a folder used to store the data package of the differential file, files in the current version that are the same as files in the new version.

The folder used to store the data package of the differential file includes the differential file and the same files, that is, including all data packages of the new version. In this case, the installation can be performed, that is, the installation is performed.

Specifically, the App developer App Store or the file (for example, a manifest.webapp file) corresponding to the Web App on the server may describe the update information, that is, the App Store includes description information of the differential file between the new version and the current version of the Web App, that is, the App Store knows the differential file of the current version of the Web App. For example, a field "change (change)" is added to the file (for example, a manifest.webapp file) corresponding to the Web App, where the change field includes a value for indicating the differential file, that is, the change field includes some specific values to describe which files are changed. When the App Store or server receives a request message for requesting downloading the update package, or when the App Store or server knows that the currently running Web App has a new version, the App Store or server may send the differential file between the new version and the current version of the Web App to the first path of a communication device, where the communication device is a device for implementing this method.

It should be noted that the differential file may further include a file used to indicate relative positions for invoking other files, for example, an index.html (the file is a file well-known in the Web technology, and has no specific Chinese meanings) file.

The following describes the update in the file corresponding to the Web App (for example, a manifest.webapp file) by using a specific example. A Manifest (the field is a field well-known in the Web technology, and has no specific Chinese meanings) field in the file is as follows:

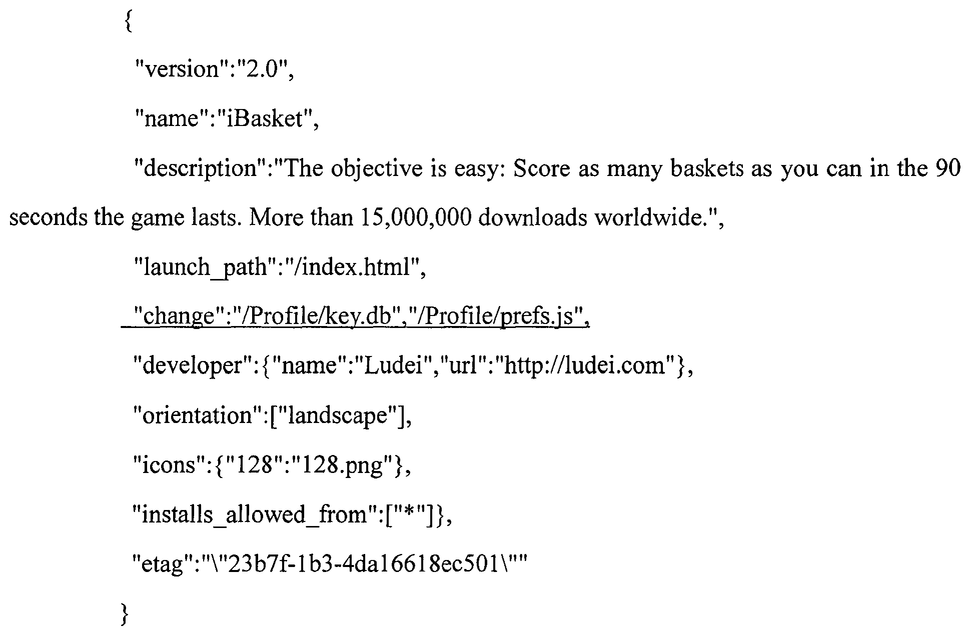

In another embodiment, the device may further include:
a setting unit (not shown in the figure), configured to set the first path as a default path of the Web App. The setting unit (not shown in the figure) may be further configured to: bind the first path with an application identifier of the Web App, that is, bind the first path with an application identifier (App URI, namely, App Uniform Resource Identifier, application uniform resource identifier) generated during the original installation of the Web App to replace the original associated path, so that the first path is used as the default path of the Web App.

For example, the following path is set as the default path of the Web App:
"/data/data/org.mozilla.firefox/files/mozilla/WebApp/Apps/AppName/version2.0"

For another example, the following path is bound with the original App URI of the Web App and is used as the default path of the Web App:
"/data/data/org.mozilla.firefox/files/mozilla/WebApp/Apps/AppName/version2.0" is bound with the original App URI (for example, app://c13c6f30-ce25-11e0-9572-0800200c9a66/index.html) to replace the originally associated path.

In an existing Web App OS, after the Web App is installed, the system generates an App URI for the Web App and uses the App URI as the default open path of the Web App, but the URI is only a logical character string and needs to be mapped to a specific file path.

After the first path is set as the default path of the Web App,
the file in the second path is deleted, and the Web App of the current version is uninstalled

In another embodiment, the downloading unit 51 may be further configured to: when receiving an update request input by the user for updating the currently running Web App, continue to run the Web App, and download the update package of the new version of the Web App. That is, it can be implemented that the update process is triggered by the user.

In another embodiment, the update may be directly completed not according to the command input by the user. That is, when automatically generating an update request for updating the currently running Web App, the downloading unit 51 continues to run the Web App, and directly downloads the update package of the new version. Of course, downloading of the update package is performed in the background.

The communication device provided by this embodiment may be a mobile phone, a tablet computer, a computer, a vehicle-mounted device, and so on.

In the foregoing technical solution, on the basis of the foregoing embodiment, multiple optional implementation manners are added, and all these can make it convenient to update a Web App in a packaged form in a mobile operating system built by using an open Web App technology, and high user experience is achieved in an update process.

FIG. 6 is a schematic structural diagram of another communication device according to an embodiment of the present invention. As shown in FIG. 6, the communication device includes: a recognizing unit 61, a downloading unit 62, an installing unit 63, and a loading unit 64.

The recognizing unit 61 is configured to recognize, through communication with an App Store or a developer server, that a currently running Web App has a new version.

The recognizing unit 61 may be further configured to send a query message including a version number of the Web App to the App Store, where the App Store compares whether the version number of the Web App and the version number of the Web App in the App Store are consistent, and if not, determines that the currently running Web App has a new version. Specifically:
every time when the developer submits a data package (for example, a zip package) of the new version of the Web App to the App Store, the App Store automatically generates, according to content in a manifest.Web App (the file is a file well-known in the Web technology, and has no specific Chinese meanings) file in the data package, a file (for example, a mini manifest file) including version information of the Web App, for example, the file includes a "version version" field, which is used to identify the version number of the data package.

After the Web App of the current version is downloaded and installed in the communication device, a file (a Web App.json file) including the version number of the Web App is automatically generated and stored in the communication device, for example, the file includes a "version" field, which is used to identify the version number of the Web App.

The Web App of the current version may perform communication with the App Store periodically and actively, and compare whether the "version" field in the App Store is consistent with the "version" field in the communication device. When the version numbers are inconsistent, it indicates that the currently running Web App has a new version. For example, the "version" field in the mini manifest file in the App Store is compared with the "version" field in the Web App.json file in the communication device.

The recognizing unit 61 may be further configured to: when the App Store determines that the currently running Web App has a new version, receive an indication message sent by the App Store for indicating that the Web App has a new version. Specifically:
every time when the communication device downloads a Web App from the App Store and installs the Web App, the App Store may generate a record, and record the version that has been downloaded by the communication device. Meanwhile, the App Store periodically checks the Web App in the communication device, namely, the running Web App in the downloading unit 62, and compares the App version number in the communication device with the version number owned by the App Store, thereby determining that the currently running Web App has a new version.

The recognizing unit 61 may be further configured to send a query message including basic information of the Web App to the App Store, where the App Store compares whether the basic information of the Web App and the basic information of the Web App in the App Store are consistent, and if not, determines that the currently running Web App has a new version. Specifically:
an optional field (for example, updateByServer) is added to the package file (for example, manifest.Web App) of the Web App of the current version, where the field may be as follows:

   ```
          updateByServer: {
                         "url": "http://xxxxxxx"
             }
```
where, "url": "http://xxxxxxx" is used to indicate an interface provided by the developer server for detecting update and returning the latest version.

When the Web App of the current version is installed, a file including the basic information of the Web App is generated in the default path of the Web App, for example, the version number and the name of the Web App.

The Web App of the current version may periodically obtain a value of a uniform resource locator (Uniform Resource Locator, URL) value from the updateByServer, and then use the locally stored basic information of the Web App as a parameter to access the URL. After receiving the parameter sent by the Web App, the developer server queries, according to the basic information of the Web App, whether the Web App has a new version, and if the Web App does not have a new version, returns a message for indicating that the Web App does not have a new version, and does not perform an operation. If the Web App has a new version, the developer server returns a message for indicating that the Web App has a new version.

The recognizing unit 61 may be further configured to: when the developer server determines that the currently running Web App has a new version, receive an indication message sent by the developer server for indicating that the Web App has a new version. Specifically:
the developer server actively obtains user equipment information, thereby completing the process of detecting whether the currently running Web App has a new version. In order for the developer server to conveniently find the Web App installed in each communication device, a registration mechanism needs to be added, and furthermore, to reduce trouble of registration of the communication device, an account of the App Store may be used to log in to the developer server. Herein the App Store needs to open an administrator (outh) based account authentication interface, so that the developer can invoke the interface. Therefore, the communication device can securely log in to the developer server by using the account of the App Store.

On the premise that the communication device logs in by using the account of the App Store, the developer server can find, by using the account, the App Store installed in the communication device, periodically check the App Store and version number in the communication device, and determine, by comparing version numbers, whether the currently running Web App has a new version.

The downloading unit 62 is configured to: when receiving an update request for updating the currently running Web App, continue to run the Web App, and download an update package of the new version of the Web App.

The downloading unit 62 may also be configured to: when downloading of the update package is completed, display a prompt message for prompting the user that downloading of the new version is completed, and when the user sees the prompt message and a confirmation message input by the user for determining to temporarily store the current status of the Web App of the current version is received, download the update package of the new version; or when downloading of the update package is completed, download the update package of the new version.

The Web App may be any Web App that can run in a communication device, for example, a Web App in a packaged form in a mobile operating system (for example, a Firefox OS system) built by using an open Web App technology, and may also be a Web App that can run in other mobile operating systems, for example, a Web App that can run in an Android system, an iOS system, or a Windows Phone system.

The update package may be all files of the new version, or the update package may be a differential file between the new version and the current version of the Web App. That is, all files of the new version or a differential file between the new version of the Web App and the current version of the Web App may be downloaded.

The installing unit 63 is configured to: after the downloading of the update package is completed, perform installation of the update package in a background, where a new installation file generated during the installation is stored in a first path, which is different from a second path where an installation file of a current version of the Web App is stored.

The loading unit 64 is configured to load a page file in the new installation file to the Web App to display a page of the new version.

In an optional implementation manner, the communication device may further include:
a caching unit (not shown in the figure), configured to temporarily store data used to indicate a current status of the Web App.

The loading unit 64 may be further configured to load the data to the page of the new version, so that the current status is displayed on the page of the new version.

In another embodiment, the update package may be all files of the new version, and may also be a differential file between the new version and the current version of the Web App. That is, the downloading the update package of the new version may include:
downloading all files of the new version to a first path, which is different from a path where a file of the current version is stored.

The downloading the update package of the new version may further include:
downloading a differential file between the new version and the current version of the Web App to a first path; which is different from a path where a file of the current version is stored. In this case, only a differential file between the new version and the current version of the Web App needs to be downloaded, thereby saving network resources. However, because only the differential file is downloaded, and the differential file generally cannot complete running of the Web App, it is necessary to transfer, to a folder used to store the data package of the differential file, files in the current version that are the same as files in the new version. The communication device may further include:
   a transferring unit (not shown in the figure), configured to transfer, to a folder used to store the data package of the differential file, files in the current version that are the same as files in the new version.

The folder used to store the data package of the differential file includes the differential file and the same files, that is, including all data packages of the new version. In this case, the installation can be performed.

The communication device provided by this embodiment may be any communication device supporting Web Apps, for example, a mobile phone, a tablet computer, a computer, and a vehicle-mounted device.

In the foregoing technical solution, on the basis of the foregoing embodiment, multiple optional implementation manners are added, and all these can make it convenient to update a Web App in a packaged form in a mobile operating system built by using an open Web App technology, and high user experience is achieved in an update process.

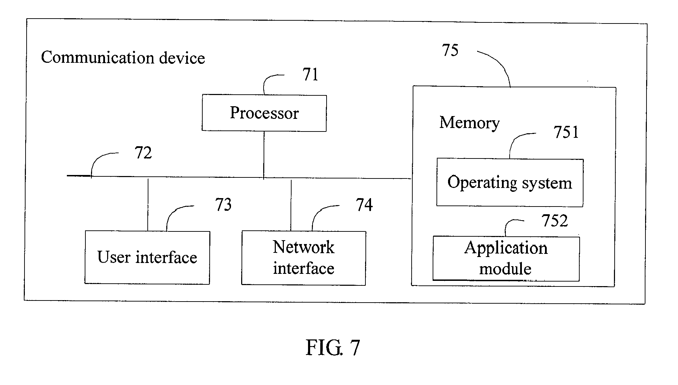

FIG. 7 is a schematic structural diagram of another communication device according to an embodiment of the present invention. The communication device is used to execute a method for updating a Web App according to an embodiment of the present invention. As shown in FIG. 7, the communication device includes: at least one processor 71, for example, a CPU, at least one network interface 74 or other user interface 73, a memory 75, and at least one communication bus 72. The communication bus 72 is configured to implement the connection and communication between the components. The user interface 73 may optionally include a USB interface and other standard interfaces and wired interfaces. The network interface 74 may optionally include a Wi-Fi interface and other wireless interfaces. The memory 75 may include a high-speed RAM memory, and may also include a non-volatile memory (non-volatile memory), for example, at least one disk storage. The memory 75 may optionally include at least one storage apparatus located far away from the processor 71.

In some implementation manners, the memory 75 stores the following elements: executable modules or data structures, or their subsets, or their extension sets:
an operating system 751, including various system programs and configured to implement various basic services and process hardware-based tasks; and
an application module 752, including various applications such as a device control service program and a device recognition service program, and configured to implement various application services.

Specifically, the processor 71 is configured to invoke the program stored in the memory 75 to perform the following operations:
when receiving an update request for updating a currently running Web App, continuing to run the Web App, and downloading an update package of a new version of the Web App;
after the downloading of the update package is completed, performing installation of the update package in a background, where a new installation file generated during the installation is stored in a first path, which is different from a second path where an installation file of a current version of the Web App is stored; and
loading a page file in the new installation file to the Web App to display a page of the new version.

The Web App may be any Web App that can run in a communication device, for example, a Web App in a packaged form in a mobile operating system (for example, a Firefox OS system) built by using an open Web App technology, and may also be a Web App that can run in other mobile operating systems, for example, a Web App that can run in an Android system, an iOS system, or a Windows Phone system. The manner of downloading the update package of the new version is not limited in this embodiment, for example, may be sending, to a server, a request message for requesting returning the update package, and then receiving the update package sent by the server, and for example, may be receiving the update package actively sent by the server.

The performing installation of the update package in a background means performing installation of the update package while running the Web App, and storing a new installation file generated during the installation in a first path, which is different from a second path where an installation file of a current version of the Web App is stored.

The page file is a page file in the new installation file. In this case, the page obtained by loading the page file is a page of the new version, that is, the page displayed by the Web App is a page of the new version, that is, the update of the Web App is completed.

In another embodiment, the processor 71 may be further configured to perform the following operations:
when receiving an update request for updating a currently running Web App, continuing to run the Web App, and downloading an update package of a new version of the Web App;
after the downloading of the update package is completed, performing installation of the update package in a background, where a new installation file generated during the installation is stored in a first path, which is different from a second path where an installation file of a current version of the Web App is stored;
temporarily storing data used to indicate a current status of the Web App;
loading a page file in the new installation file to the Web App to display a page of the new version; and
loading the data to the page of the new version, so that the current status is displayed on the page of the new version.

The manner of knowing that the currently running Web App has a new version is not limited by this embodiment, for example, may be knowing, through communication with an application store (App Store), that the currently running Web App has a new version, or actively notifying, by an App Store, that the currently running Web App has a new version, or knowing, through communication with a server, that the currently running Web App has a new version, or actively notifying, by a server, that the currently running Web App has a new version.

The update package may be all files of the new version, or the update package may be a differential file between the new version and the current version of the Web App. That is, all files of the new version or a differential file between the new version of the Web App and the current version of the Web App may be downloaded.

The current status may be a current behavior of the continuously running Web App, or a transaction currently processed by the continuously running Web App. Temporarily storing the data used to indicate the current status of the Web App means temporarily storing the current status of the continuously running Web App. For example, if the current status of the continuously running Web App is chatting with a friend, the processor 71 may temporarily store a Web page of the chat, namely, content information of the chat. The temporarily stored data in this embodiment is actively invoked by the Web App only when the data is updated, and the data is immediately deleted after the current status is loaded to the Web App.

The page file is a page file in the new installation file. In this case, the page obtained by loading the page file is a page of the new version, that is, the page displayed by the Web App is a page of the new version, that is, the update of the Web App is completed.

The page file may include:
a page file included in the new installation file and corresponding to a current page of the Web App; or
a page file included in the new installation file and used to display a home page of the Web App of the new version (for example, an index.html file).

The data is used to indicate the current status of the Web App, that is, the processor 71 recovers the current status on the page of the new version. However, in practice, the page update and data loading are completed within a very short time, which is not sensed by the user basically. Therefore, the user has an impression that the current status is always displayed and is displayed just through pages of different versions.

In an optional implementation manner, the page file includes a page file included in the new installation file and corresponding to a current page of the Web App. The operation of loading, by the processor 71, a page file in the new installation file to the Web App, may include:
determining a sub-path of the current page of the Web App in the second path; and
loading a page file in a sub-path of the first path to the Web App.

That is, the sub-path of the page file in the first path is the same as the sub-path of the current page of the Web App in the second path.

In an optional implementation manner, the operation of temporarily storing, by the processor 71, data used to indicate a current status of the Web App, may include:
invoking a first command in a preset application programming interface to temporarily store the data used to indicate the current status of the Web App to a cache folder corresponding to the application programming interface. Specifically, the Web App may be controlled to invoke a first command in a preset application programming interface to temporarily store the data used to indicate the current status of the Web App to a cache folder corresponding to the application programming interface.

After the installation is completed, a prompt message for prompting the user of completion of the installation may be displayed. When the user sees the prompt message, and the Web App receives a confirmation message input by the user for determining to temporarily store the current status of the Web App, the Web App can invoke a first command in a preset application programming interface to temporarily store the data used to indicate the current status of the Web App to a cache folder corresponding to the application programming interface. Or after the installation is completed, the Web App directly invokes a first command in a preset application programming interface to temporarily store the data used to indicate the current status of the Web App to a cache folder corresponding to the application programming interface.

The application programming interface may include two commands, namely, a first command and a second command, where the first command is used to temporarily store the data used to indicate the current status of the Web App, and the second command is used to load the data temporarily stored by the first command. Furthermore, the data temporarily stored by the first command is temporarily stored to a specified folder, namely, the cache folder. The data temporarily stored in the folder may be data in a json format (the format has no specific Chinese meanings), and the suffix of the folder is also a specified suffix, for example, a .db suffix. That is, the second command loads the current status of the folder with the .db suffix. Furthermore, the current status temporarily stored by the first command may further be set according to a developer of the Web App, that is, a mapping relationship between data and the current status is set by the developer. Specifically, the developer pre-specifies a mapping relationship between a behavior and data, that is, the data may be known once the current status of the Web App is known. For example, the current status of the Web App is chatting with friend a on a direct message chat Web page. Therefore, the data temporarily stored by the processor 71 may include:
"page":"chat" and "friend":"a", where "page":"chat" is used to indicate a direct message chat Web page, and "friend": "a" is used to indicate a chat with friend a. Specifically, "page":"chat" is specified by the developer and corresponds to the direct message chat Web page, and "friend":"a" is specified by the developer and corresponds to the chat with friend a. In this case, when it is known that the current status of the Web App is chatting with friend a on the direct message chat Web page, the first command may be invoked to temporarily store "page":"chat" and "friend":"a" to the cache folder corresponding to the application programming interface.

The following describes the application programming interface by using a specific example, that is, the application programming interface may be defined as follows:

```
          interface NavigatorUpdateCache {
                                   void updateCache( userData );
                                   void updateCacheLoad( );
                            }
          updateCache( userData ) is the first command, userData is the data, and userData
          is data in the json format; updateCacheLoad( ) is the second command
and used to invoke the
          data. Furthermore, the cache folder may be an updateCache.db folder in
          "/data/data/org.mozilla.firefox/files/mozilla/WebApp/Apps/AppName/temp".
```

The current status of the Web App is chatting with friend a on a direct message chat Web page. The userData is as follows:

```
          userData={
            "page": "chat", //indicates a direct message chat Web page
            "friend": "a" //indicates a chat with a
           }
```

The operation of loading, by the processor 71, the data to the page of the new version, so that the current status is displayed on the page of the new version, may include:
invoking a second command in the application programming interface to load the data in the cache folder to the page of the new version, so as to display the current status on the page of the new version. Specifically, the Web App may invoke a second command in the application programming interface to load the data in the cache folder to the page of the new version, so as to display the current status on the page of the new version.

After the installation is completed, the Web App may be run. The Web App invokes the second command in the application programming interface to load the data to recover the current status. Specifically, the updateCacheLoad( ) may be invoked to load the data in the cache folder to recover the current status. In this case, in the whole process, the current status is not interrupted, so that the user can use the Web App without interruption in the whole update process.

In an optional implementation manner, the update package may be all files of the new version, and may also be a differential file between the new version and the current version of the Web App. That is, the downloading the update package of the new version may include:
downloading all data packages of the new version of the Web App, that is, all data packages of the new version are downloaded, where the downloading path is not limited by the embodiment of the present invention.

The downloading the update package of the new version may further include:
downloading a differential data package between the new version of the Web App and the current version of the Web App. In this case, only a differential file between the new version and the current version of the Web App needs to be downloaded, thereby saving network resources. However, because only the differential file is downloaded, and the differential file generally cannot complete running of the Web App, it is necessary to transfer, to a folder used to store the data package of the differential file, files in the current version that are the same as files in the new version. Specifically, after the processor 71 performs the operation of downloading the data package of the differential file between the new version of the Web App and the current version of the Web App, and before the processor 71 performs the operation of performing the installation of the update package in the background, the processor 71 may further perform the following operation:
   transferring, to a folder used to store the data package of the differential file, files in the current version that are the same as files in the new version.

The folder used to store the data package of the differential file includes the differential file and the same files, that is, including all data packages of the new version. In this case, the installation can be performed.

In another embodiment, after the processor 71 performs the operation of temporarily storing data used to indicate a current status of the Web App, the processor 71 may further perform the following operation:
setting the first path as a default path of the Web App. The operation further specifically includes: binding the first path with an application identifier of the Web App, that is, binding the first path with an application identifier (App URI, namely, App Uniform Resource Identifier, application uniform resource identifier) generated during the original installation of the Web App to replace the original associated path, so that the first path is used as the default path of the Web App.

After the processor 71 sets the first path as the default path of the Web App, the processor 71 may further perform the following operation:
deleting the file in the second path and uninstalling the Web App of the current version.

In another embodiment, the operation of continuing to run the Web App by the processor 71 when receiving an update request for updating a currently running Web App, and downloading an update package of a new version of the Web App, may further include:
continuing to run the Web App when receiving an update request input by the user for updating the currently running Web App, and downloading the update package of the new version. That is, it can be implemented that the update process is triggered by the user.

In another embodiment, the update may be directly completed not according to the command input by the user. That is, when an update request for updating the currently running Web application is automatically generated, the processor 71 continues to run the Web App, and directly downloads the update package of the new version. Of course, downloading of the update package is performed in the background.

In another embodiment, the processor 71 may be further configured to perform the following operations:
recognizing, through communication with an App Store or a developer server, that the currently running Web App has a new version;
when receiving an update request for updating the currently running Web App, continuing to run the Web App, and downloading the update package of the new version of the Web App;
after the downloading of the update package is completed, performing installation of the update package in a background, where a new installation file generated during the installation is stored in a first path, which is different from a second path where an installation file of a current version of the Web App is stored; and
loading a page file in the new installation file to the Web App to display a page of the new version.

In an optional implementation manner, before the processor 71 loads a page file in the new installation file to the Web App to display a page of the new version, the processor 71 may perform the following operation:
temporarily storing data used to indicate a current status of the Web App.

After the processor 71 loads a page file in the new installation file to the Web App to display a page of the new version, the processor 71 may further perform the following operation:
loading the data to the page of the new version, so that the current status is displayed on the page of the new version.

The operation of recognizing, by the processor 71 through communication with the App Store or developer server, that the currently running Web App has a new version, may include:
sending a query message including a version number of the Web App to the App Store, where the App Store compares whether the version number of the Web App and the version number of the Web App in the App Store are consistent, and if not, determines that the currently running Web App has a new version. Specifically:
   every time when the developer submits a data package (for example, a zip package) of the new version of the Web App to the App Store, the App Store automatically generates, according to content in a manifest.Web App (the file is a file well-known in the Web technology, and has no specific Chinese meanings) file in the data package, a file (for example, a mini manifest file) including version information of the Web App, for example, the file includes a "version version" field, which is used to identify the version number of the data package.

After the Web App of the current version is downloaded and installed in the communication device, a file (a Web App.json file) including the version number of the Web App is automatically generated and stored in the communication device, for example, the file includes a "version" field, which is used to identify the version number of the Web App.

The Web App of the current version may perform communication with the App Store periodically and actively, and compare whether the "version" field in the App Store is consistent with the "version" field in the communication device. When the version numbers are inconsistent, it indicates that the currently running Web App has a new version. For example, the "version" field in the mini manifest file in the App Store is compared with the "version" field in the Web App.json file in the communication device.

The operation of recognizing, by the processor 71 through communication with the App Store or developer server, that the currently running Web App has a new version, may include:
when the App Store determines that the currently running Web App has a new version, receiving an indication message sent by the App Store for indicating that the Web App has a new version. Specifically:
   every time when the communication device downloads a Web App from the App Store and installs the Web App, the App Store may generate a record, and record the version that has been downloaded by the communication device. Meanwhile, the App Store periodically checks the Web App in the communication device, namely, the running Web App compares the App version number in the communication device with the version number owned by the App Store, thereby determining that the currently running Web App has a new version.

The operation of recognizing, by the processor 71 through communication with the App Store or developer server, that the currently running Web App has a new version, may include: sending a query message including basic information of the Web App to the App Store, where the App Store compares whether the basic information of the Web App and the basic information of the Web App in the App Store are consistent, and if not, determines that the currently running Web App has a new version. Specifically:
an optional field (for example, updateByServer) is added to the package file (for example, manifest. Web App) of the Web App of the current version, where the field may be as follows:

   ```
          updateByServer: {
                         "url": "http://xxxxxxx"
             }
```
where, "url": "http://xxxxxxx" is used to indicate an interface provided by the developer server for detecting update and returning the latest version.

When the Web App of the current version is installed, a file including the basic information of the Web App is generated in the default path of the Web App, for example, the version number and the name of the Web App.

The Web App of the current version may periodically obtain a value of a uniform resource locator (Uniform Resource Locator, URL) value from the updateByServer, and then use the locally stored basic information of the Web App as a parameter to access the URL. After receiving the parameter sent by the Web App, the developer server queries, according to the basic information of the Web App, whether the Web App has a new version, and if the Web App does not have a new version, returns a message for indicating that the Web App does not have a new version, and does not perform an operation. If the Web App has a new version, the developer server returns a message for indicating that the Web App has a new version.

The operation of recognizing, by the processor 71 through communication with the App Store or developer server, that the currently running Web App has a new version, may include:
when the developer server determines that the currently running Web App has a new version, receiving an indication message sent by the developer server for indicating that the Web App has a new version. Specifically:
   the developer server actively obtains user equipment information, thereby completing the process of detecting whether the currently running Web App has a new version. In order for the developer server to conveniently find the Web App installed in each communication device, a registration mechanism needs to be added, and furthermore, to reduce trouble of registration of the communication device, an account of the App Store may be used to log in to the developer server. Herein the App Store needs to open an administrator (outh) based account authentication interface, so that the developer can invoke the interface. Therefore, the communication device can securely log in to the developer server by using the account of the App Store.

On the premise that the communication device logs in by using the account of the App Store, the developer server can find, by using the account, the App Store installed in the communication device, periodically check the App Store and version number in the communication device, and determine, by comparing version numbers, whether the currently running Web App has a new version.

The communication device provided by this embodiment may be any communication device supporting Web Apps, for example, a mobile phone, a tablet computer, a computer, and a vehicle-mounted device.

In the foregoing technical solution, when an update request for updating a currently running Web App is received, running of the Web App is continued, and an update package of a new version of the Web App is downloaded; after the downloading of the update package is completed, installation of the update package is performed in a background, where a new installation file generated during the installation is stored in a first path, which is different from a second path where an installation file of a current version of the Web App is stored; and a page file in the new installation file is loaded to the Web App to display a page of the new version. In this case, the Web App runs in the whole update process without interruption, and a user can use the Web App without interruption. Therefore, it is convenient to update a Web App in a packaged form in a mobile operating system built by using an open Web App technology, and high user experience is achieved in an update process.

A person of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The foregoing storage medium may be: a magnetic disk, an optical disc, a read-only memory (Read-Only Memory, ROM), or a random access memory (Random Access Memory, RAM) or the like.

The foregoing disclosed descriptions are merely exemplary embodiments of the present invention, but not intended to limit the scope of the present invention. Any modification, equivalent replacement, or improvement made according to the claims of the present invention should fall within the scope of the present invention.

## Claims

1. A method for updating a Web application, comprising:
when receiving an update request for updating a currently running Web application, continuing to run the Web application, and downloading an update package of a new version of the Web application;
after the downloading of the update package is completed, performing installation of the update package in a background, wherein a new installation file generated during the installation is stored in a first path, which is different from a second path where an installation file of a current version of the Web application is stored; and
loading a page file in the new installation file to the Web application to display a page of the new version.

2. The method according to claim 1, wherein the page file comprises:
a page file comprised in the new installation file and corresponding to a current page of the Web application; or
a page file comprised in the new installation file and used to display a home page of the Web application of the new version.

3. The method according to claim 2, wherein the loading a page file in the new installation file to the Web application comprises:
determining a sub-path of the current page of the Web application in the second path; and
loading a page file in a sub-path of the first path to the Web application.

4. The method according to claim 3, wherein: before the page of the new version is displayed, the method comprises:
temporarily storing data used to indicate a current status of the Web application; and
after the page of the new version is displayed, the method further comprises:
loading the data to the page of the new version, so that the current status is displayed on the page of the new version.

5. The method according to claim 4, wherein: the temporarily storing data used to indicate a current status of the Web application comprises:
invoking a first command in a preset application programming interface to temporarily store the data used to indicate the current status of the Web application to a cache folder corresponding to the application programming interface; and
the loading the data to the page of the new version comprises:
invoking a second command in the application programming interface to load the data in the cache folder to the page of the new version.

6. The method according to any one of claims 1 to 5, wherein the downloading an update package of a new version of the Web application comprises:
downloading all data packages of the new version of the Web application; or
downloading a differential data package between the new version of the Web application and the current version of the Web application.

7. The method according to claim 6, wherein after the downloading a differential data package between the new version of the Web application and the current version of the Web application, and before the performing installation of the update package in a background, the method further comprises:
transferring, to a folder used to store the data package of the differential file, files in the current version that are the same as files in the new version.

8. The method according to any one of claims 1 to 5, wherein after the performing installation of the update package in a background, the method further comprises:
setting the first path as a default path of the Web application.

9. The method according to claim 4, wherein the setting the first path as a default path of the Web application comprises:
binding the first path with an application identifier of the Web application, so that the first path is set as the default path of the Web application.

10. The method according to any one of claims 1 to 5, wherein the receiving an update request for updating a currently running Web application comprises:
receiving an update request input by a user for updating the currently running Web application; or
automatically generating an update request for updating the currently running Web application.

11. A communication device, comprising a downloading unit, an installing unit, and a loading unit, wherein:
the downloading unit is configured to: when receiving an update request for updating a currently running Web application, continue to run the Web application, and download an update package of a new version of the Web application;
the installing unit is configured to perform installation of the update package in a background after the downloading of the update package is completed, wherein a new installation file generated during the installation is stored in a first path, which is different from a second path where an installation file of a current version of the Web application is stored; and
the loading unit is configured to load a page file in the new installation file to the Web application to display a page of the new version.

12. The device according to claim 11, wherein the page file comprises:
a page file comprised in the new installation file and corresponding to a current page of the Web application; or
a page file comprised in the new installation file and used to display a home page of the Web application of the new version.

13. The device according to claim 12, wherein the loading unit is further configured to determine a sub-path of the current page of the Web application in the second path, and load a page file in a sub-path of the first path to the Web application.

14. The device according to claim 13, further comprising:
a caching unit, configured to temporarily store data used to indicate a current status of the Web application; wherein
the loading unit is further configured to load the data to the page of the new version, so that the current status is displayed on the page of the new version.

15. The device according to claim 14, wherein: the caching unit is further configured to invoke a first command in a preset application programming interface to temporarily store the data used to indicate the current status of the Web application to a cache folder corresponding to the application programming interface; and
the loading unit is further configured to invoke a second command in the application programming interface to load the data in the cache folder to the page of the new version.

16. The device according to any one of claims 11 to 15, wherein: the downloading unit is further configured to download all data packages of the new version of the Web application; or
the downloading unit is further configured to download a differential data package between the new version of the Web application and the current version of the Web application.

17. The device according to claim 16, further comprising:
a transferring unit, configured to transfer, to a folder used to store the data package of the differential file, files in the current version that are the same as files in the new version.

18. The device according to any one of claims 11 to 15, further comprising:
a setting unit, configured to set the first path as a default path of the Web application.

## Amended claims

### Amended claims in accordance with Rule 137(2) EPC.

**1.** A method for updating a Web application, comprising:
when receiving an update request for updating a currently running Web application, continuing to run the Web application, and downloading an update package of a new version of the Web application, wherein the Web application is a Web application that can run in a communication device;
after the downloading of the update package is completed, performing installation of the update package in a background, wherein a new installation file generated during the installation is stored in a first path, which is different from a second path where an installation file of a current version of the Web application is stored; and
loading a page file in the new installation file to the Web application to display a page of the new version.

**2.** The method according to claim 1, wherein the page file comprises:
a page file comprised in the new installation file and corresponding to a current page of the Web application; or
a page file comprised in the new installation file and used to display a home page of the Web application of the new version.

**3.** The method according to claim 2, wherein the loading a page file in the new installation file to the Web application comprises:
determining a sub-path of the current page of the Web application in the second path; and
loading a page file in a sub-path of the first path to the Web application.

**4.** The method according to claim 3, wherein: before the page of the new version is displayed, the method comprises:
temporarily storing data used to indicate a current status of the Web application; and
after the page of the new version is displayed, the method further comprises:
loading the data to the page of the new version, so that the current status is displayed on the page of the new version.

**5.** The method according to claim 4, wherein: the temporarily storing data used to indicate a current status of the Web application comprises:
invoking a first command in a preset application programming interface to temporarily store the data used to indicate the current status of the Web application to a cache folder corresponding to the application programming interface; and
the loading the data to the page of the new version comprises:
invoking a second command in the application programming interface to load the data in the cache folder to the page of the new version.

**6.** The method according to any one of claims 1 to 5, wherein the downloading an update package of a new version of the Web application comprises:
downloading all data packages of the new version of the Web application; or
downloading a differential data package between the new version of the Web application and the current version of the Web application.

**7.** The method according to claim 6, wherein after the downloading a differential data package between the new version of the Web application and the current version of the Web application, and before the performing installation of the update package in a background, the method further comprises:
transferring, to a folder used to store the data package of the differential file, files in the current version that are the same as files in the new version.

**8.** The method according to any one of claims 1 to 5, wherein after the performing installation of the update package in a background, the method further comprises:
setting the first path as a default path of the Web application.

**9.** The method according to claim 4, wherein the setting the first path as a default path of the Web application comprises:
binding the first path with an application identifier of the Web application, so that the first path is set as the default path of the Web application.

**10.** The method according to any one of claims 1 to 5, wherein the receiving an update request for updating a currently running Web application comprises:
receiving an update request input by a user for updating the currently running Web application; or
automatically generating an update request for updating the currently running Web application.

**11.** A communication device, comprising a downloading unit, an installing unit, and a loading unit, wherein:
the downloading unit is configured to: when receiving an update request for updating a currently running Web application, continue to run the Web application, and download an update package of a new version of the Web application, wherein the Web application is a Web application that can run in a communication device;
the installing unit is configured to perform installation of the update package in a background after the downloading of the update package is completed, wherein a new installation file generated during the installation is stored in a first path, which is different from a second path where an installation file of a current version of the Web application is stored; and
the loading unit is configured to load a page file in the new installation file to the Web application to display a page of the new version.

**12.** The device according to claim 11, wherein the page file comprises:
a page file comprised in the new installation file and corresponding to a current page of the Web application; or
a page file comprised in the new installation file and used to display a home page of the Web application of the new version.

**13.** The device according to claim 12, wherein the loading unit is further configured to determine a sub-path of the current page of the Web application in the second path, and load a page file in a sub-path of the first path to the Web application.

**14.** The device according to claim 13, further comprising:
a caching unit, configured to temporarily store data used to indicate a current status of the Web application; wherein
the loading unit is further configured to load the data to the page of the new version, so that the current status is displayed on the page of the new version.

**15.** The device according to claim 14, wherein: the caching unit is further configured to invoke a first command in a preset application programming interface to temporarily store the data used to indicate the current status of the Web application to a cache folder corresponding to the application programming interface; and
the loading unit is further configured to invoke a second command in the application programming interface to load the data in the cache folder to the page of the new version.

**16.** The device according to any one of claims l to 15, wherein: the downloading unit is further configured to download all data packages of the new version of the Web application; or
the downloading unit is further configured to download a differential data package between the new version of the Web application and the current version of the Web application.

**17.** The device according to claim 16, further comprising:
a transferring unit, configured to transfer, to a folder used to store the data package of the differential file, files in the current version that are the same as files in the new version.

**18.** The device according to any one of claims 11 to 15, further comprising:
a setting unit, configured to set the first path as a default path of the Web application.
